(19)

Europäisches
Patentamt
European
Patent Office
Office européen
des brevets

(11)　　EP 2 743 924 B1

(12)　　　　　　　　　**EUROPEAN PATENT SPECIFICATION**

(45) Date of publication and mention
of the grant of the patent:
**20.02.2019　Bulletin 2019/08**

(51) Int Cl.:
*G10L 25/78* [(2013.01)]　　*G10L 15/20* [(2006.01)]

(21) Application number: **14156678.6**

(22) Date of filing: **24.12.2010**

(54) **Method and apparatus for adaptively detecting a voice activity in an input audio signal**

Verfahren und Vorrichtung zur adaptiven Detektion einer Stimmaktivität in einem Audioeingangssignal

Procédé et appareil permettant de détecter une activité vocale dans un signal audio d'entrée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.06.2014　Bulletin 2014/25**

(60) Divisional application:
**18214325.5**

(62) Document number(s) of the earlier application(s) in
accordance with Art. 76 EPC:
**10861147.6 / 2 619 753**

(73) Proprietor: **Huawei Technologies Co., Ltd.
Shenzhen, Guangdong 518129 (CN)**

(72) Inventor: **Wang, Zhe
shenzhen Guangdong (CN)**

(74) Representative: **Kreuz, Georg Maria
Huawei Technologies Duesseldorf GmbH
Riesstraße 25
80992 München (DE)**

(56) References cited:
**EP-A1- 2 159 788　　US-A- 5 649 055**

**Description**

**FIELD OF THE INVENTION**

The invention relates to a method and an apparatus for adaptively detecting a voice activity in an input audio signal consisting of frames and in particular to a voice activity detection method and apparatus using non-linearly processed sub-band segmental signal to noise ratio parameters.

**BACKGROUND OF THE INVENTION**

Voice activity detection (VAD) is generally a technique which is provided to detect a voice activity in a signal. Voice activity detectors are widely used in the telecommunication industry. The function of a voice activity detector is to detect in communication channels the presence or absence of active signals such as speech or music. The voice activity detector can be provided within a communication network wherein the network can decide to compress a transmission bandwidth in periods where active signals are absent or to perform other processing depending on a voice activity detection decision indicating whether there is an active signal or not. A voice activity detector can compare a feature parameter or a set of feature parameters extracted from the input signal to corresponding threshold values and determine whether the input comprises an active signal or not based on the comparison result. The performance of a voice activity detector is determined to a high degree on the choice of the used feature parameters. There have been many feature parameters proposed for voice activity detection such as energy based parameters, spectral envelope based parameters, entropy based parameters or higher order statistics based parameters. In general, energy based parameters provide a good voice activity detection performance. In recent years sub-band SNR based parameters as a kind of energy based parameters have been widely used in the telecommunication industry. In sub-band SNR based voice activity detectors the SNR for each frequency sub-band of an input frame is detected and the SNRs of all sub-bands are added to provide a segmental SNR. This segmental SNR parameter SSNR can be compared with a threshold value to make a voice activity detection decision VADD. The used threshold is usually a variable which is adaptive to a long term SNR of the input signal or a level of background noise.

In a recently completed ITU-T Recommendation G.720.1 the conventional SSNR parameter has been improved by applying a non-linear processing to get a modified SSNR. The calculated modified segmental SNR is also compared to a threshold which is determined from a threshold table according to the long term SNR of the input signal, the background noise variation and the voice activity detection operating point where the VAD operating point defines the tradeoff of the VAD decision between active and inactive detection, for example a quality-preferred operating point will make the VAD favor the detection of active signals and vice versa.

Although the modified segmental SNR parameter used by G.720.1 does increase the performance of voice activity detection the VAD performance in a non-stationary and low SNR background environment still needs improvement. Conventional voice activity detectors are designed to balance their performances in various background noise conditions. Accordingly, conventional voice activity detectors have a performance which is sub-optimal for specific conditions and in particular in a non-stationary and low SNR background environment.

Accordingly, a goal of the present invention is to provide a method and an apparatus for detecting a voice activity in an input audio signal which have a high VAD performance.

EP 2159788 A1 discloses a voice activity detection (VAD) device and method, so that the VAD threshold can be adaptive to the background noise variation. The VAD device includes: a background analyzing unit, adapted to: analyze background noise features of a current signal according to an input VAD judgment result, obtain parameters related to the background noise variation, and output these parameters; a VAD threshold adjusting unit, adapted to: obtain a bias of the VAD threshold according to the parameters output by the background analyzing unit, and output the bias of the VAD threshold; and a VAD judging unit, adapted to: modify a VAD threshold to be modified according to the bias of the VAD threshold output by the VAD threshold adjusting unit, judge the background noise by using the modified VA D threshold, and output a VAD judgment result. Paragraphs [0009] to [0012] thereof disclose a conventional VAD algorithm which calculates the signal level level[n] and estimated background noise level backr_est[n] of each sub_band of the input signal frame. The SNR is calculated by the following formula according to level[n] and backr_est[n]:

$$snr = \sum_{n=1}^{9} MAX\left(1.0, \frac{level[n]}{bckr\_est[n]}\right)^2 \quad \text{(a)}$$

The SNR is compared with a threshold vad_thr by a VAD to determine whether the current frame is a non-noise frame or a noise frame. Further, a method of adjusting the VAD threshold thereby is disclosed having the VAD adaptive to the variation of the background noise.

SUMMARY OF THE INVENTION

The invention provides, for solving the aforementioned shortcomings in the prior art, a method and device for detecting a voice activity according to claim 1 and 7. The invention further provides a corresponding audio signal processing device according to claim 12.

Implementation forms of a first aspect may use energy based parameters, spectral envelope based parameters, entropy based parameters or higher order statistics based parameters as VAD parameters.

In a possible implementation of the first aspect of the present invention, the invention provides a method for adaptively detecting a voice activity in an input audio signal consisting of frames comprising the steps of:

(a) determining a noise characteristic of the input signal based at least on a received input frame of the input audio signal,
(b) dividing said received input frame of said audio signal into several sub-bands,
(c) obtaining a SNR for each sub-band of said input frame,
(d) calculating a sub-band specific parameter based on said respective sub-band's SNR for each sub-band using an adaptive function,
wherein at least one parameter of the adaptive function is selected dependent on said noise characteristic of the input audio signal,
(e) deriving a modified segmental SNR as said VAD parameter by adding the sub-band specific parameters, and
(f) comparing the derived modified segmental SNR with a threshold value to provide a VAD decision.

The invention according to the first aspect of the present invention provides more efficiency and a better quality of VAD. The efficiency of VAD is the ability to detect noise characteristic such as background noise while the quality of VAD relates to the ability to detect active signals such as speech or music in the input audio signal.

In a possible implementation of the first aspect of the present invention the determined noise characteristic of said input audio signal is formed by the long term SNR of the input audio signal.

In a further possible implementation of the first aspect of the present invention the determined noise characteristic of said input audio signal is formed by a background noise variation of the input audio signal.

In a still further possible implementation of the first aspect of the present invention the determined noise characteristic of the input audio signal is formed by a combination of the long term SNR and the background noise variation of the input audio signal.

In an implementation of the first aspect of the present invention the adaptive function used for calculating a sub-band specific parameter is formed by a non-linear function.

In a possible implementation of the method for adaptively detecting a voice activity in an input audio signal according to the first aspect of the present invention a SNR for each sub-band of the input frame is obtained by obtaining a signal energy for each sub-band, e.g. a signal energy for each sub-band of the input frame.

In a further possible implementation of the method for adaptively detecting a voice activity in an input audio signal according to the first aspect of the present invention the SNR for each sub-band of said input frame is obtained by estimating a background noise energy for each sub-band.

In a further possible implementation of the method for adaptively detecting a voice activity in an input audio signal according to the first aspect of the present invention the SNR for each sub-band of said input frame is obtained by calculating the SNR for each sub-band depending on the signal energy and the background noise energy of the respective sub-band.

In a further possible implementation of the method for adaptively detecting a voice activity in an input audio signal according to the first aspect of the present invention the signal energy for each sub-band of said input frame is a smoothed signal energy forming a weighted average between the input frame and at least one previous frame.

In a further possible implementation of the method for adaptively detecting a voice activity in an input audio signal according to the first aspect of the present invention the modified SSNR is calculated by adding sub-band specific parameters as follows:

$$mssnr = \sum_{i=1}^{N} sbsp(i)$$

wherein N is the number of frequency sub-bands into which said input frame is divided,

wherein sbsp(i) is a sub-band specific parameter calculated based on the sub-band's SNR for each sub-band using an adaptive function.

In a possible implementation of the method for adaptively detecting a voice activity in an input audio signal according to the first aspect of the present invention the modified segmental SNR is calculated as follows:

$$mssnr = \sum_{i=1}^{N} \left( f\bigl(snr(i)\bigr) + \alpha \right)^{\beta}$$

wherein snr(i) is a SNR of the i-th sub-band of the input frame,
N is the number of frequency sub-bands into which said input frame is divided,
$(f(snr(i))+\alpha)^{\beta}$ is the adaptive function (AF) used to calculate the sub-band specific parameter sbsp(i), and
$\alpha$, $\beta$ are two configurable variables of the adaptive function (AF).

In a possible implementation of the method for adaptively detecting a voice activity in an input audio signal according to the first aspect of the present invention the first variable $\alpha$ of the adaptive function (AF) depends on a long term SNR (lsnr) of the input audio signal as follows:

$$\alpha = g\,(i,\,lsnr)$$

wherein g is a linear or non-linear function and
wherein the second variable $\beta$ of the adaptive function (AF) depends on the long term SNR (lsnr) and $\varphi$:

$$\beta = h\,(lsnr,\,\varphi)$$

wherein h is non-linear function and

$$\varphi = f(snr\,(i)) + \alpha.$$

In a further implementation of the method for adaptively detecting a voice activity in an input audio signal according to the first aspect of the present invention the first variable $\alpha$ of the adaptive function ((AF)) is calculated by:

$$\alpha = g\,(i,\,lnsr) = a(i) \cdot lsnr + b(i)$$

wherein a (i), b (i) are real numbers depending on a sub-band index i and
the second variable $\beta$ of the adaptive function ((AF)) is calculated by:

$$\beta = h(lsnr,\varphi) = \begin{cases} \beta_1 & \varphi \geq d \text{ and } lsnr > e_2 \\ \beta_2 & \varphi \geq d \text{ and } e_1 < lsnr \leq e_2 \\ \beta_3 & \varphi \geq d \text{ and } lsnr \leq e_1 \\ \beta_4 & otherwise \end{cases}$$

wherein $\beta1 < \beta2 < \beta3$ and $\beta4$ and d and e1 < e2 being integer or floating numbers and wherein lsnr is the long term SNR of the input audio signal.

In a possible implementation of the method for adaptively detecting a voice activity in an input audio signal according to the first aspect of the present invention the derived modified segmental SNR (mssnr) is compared with a threshold value (thr) being set to

$$thr = \begin{cases} k_1 & lsnr > e_2 \\ k_2 & e_1 < lsnr \leq e_2 \\ k_3 & lsnr \leq e_1 \end{cases}$$

wherein k1 > k2 > k3 and e1 < e2 being integer or floating numbers and wherein the voice activity detection decision (VADD) is generated as follows:

$$VADD = \begin{cases} 1 & mssnr > thr \\ 0 & mssnr \leq thr \end{cases}$$

wherein VADD = 1 represents an active frame with voice activity being present and
VADD = 0 represents a passive frame with voice activity being absent.

In a possible implementation of the method for adaptively detecting a voice activity input audio signal according to the first aspect of the present invention the first variable $\alpha$ of the adaptive function ((AF)) is calculated by:

$$\alpha = g\,(i,\,lsnr,\,\varepsilon) = a\,(i) \cdot lsnr + b\,(i) + c\,(\varepsilon)$$

wherein a (i), b (i) are real numbers depending on a sub-band index i and
c ($\varepsilon$) is a real number depending on the estimated fluctuation of the background noise of the input audio signal and wherein the second variable $\beta$ of the adaptive function ((AF)) is calculated by:

$$\beta = h(lsnr,\varphi,\varepsilon) = \begin{cases} \beta_1 & \varphi \geq d \text{ and } lsnr > e_2 \text{ and } \varepsilon \leq p \\ \beta_2 & \varphi \geq d \text{ and } lsnr > e_2 \text{ and } \varepsilon > p \\ \beta_3 & \varphi \geq d \text{ and } e_1 < lsnr < e_2 \text{ and } \varepsilon \leq p \\ \beta_4 & \varphi \geq d \text{ and } e_1 < lsnr < e_2 \text{ and } \varepsilon > p \\ \beta_5 & \varphi \geq d \text{ and } lsnr \leq e_1 \text{ and } \varepsilon \leq p \\ \beta_6 & \varphi \geq d \text{ and } lsnr \leq e_1 \text{ and } \varepsilon > p \\ \beta_7 & \varphi < d \end{cases}$$

wherein $\varphi$ = f(snr(i)) + $\alpha$ and $\varepsilon$ is the estimated fluctuation of the background noise and d and e1 < e2 and p being integer or floating numbers.

In a possible implementation of a method for adaptively detecting a voice activity in an input audio signal according to the first aspect of the present invention the derived modified segmental SNR (mssnr) is compared with a threshold value (thr) being set to:

$$thr = \begin{cases} q_1 + r_1 \cdot Min\left[\dfrac{lsnr - v_1}{W_1},1\right] & lsnr > e_2 \\ q_2 + r_2 Min\left[\dfrac{lsnr - v_2}{W_2}\right] & e_1 < lsnr \leq e_2 \\ q_3 + r_3 \cdot Max\left[Min\dfrac{lsnr - v_3}{W_3},1\right] & lsnr \leq e_1 \end{cases}$$

wherein q1, q2, q3 and r1, r2, r3 and e1 < e2 and
v1, v2, v3 and w1, w2, w3 being integer or floating numbers,

wherein the voice activity detection decision (VADD) is generated as follows:

$$VADD = \begin{cases} 1 & mssnr > thr \\ 0 & mssnr \leq thr \end{cases}$$

wherein VADD = 1 represents an active frame with voice activity being present and VADD = 0 represents a passive frame with voice activity being absent.

The invention further provides according to a second aspect a VAD apparatus for detecting a voice activity in an input audio signal consisting of frames
wherein said VAD apparatus comprises:

a SNR based VAD parameter calculation unit which calculates a SNR (snr) for each sub-band of an applied input frame and a sub-band specific parameter (sbsp) based on said respective sub-band SNR (snr) for each sub-band using an adaptive function (AF) and derives a modified segmental SNR (mssnr) by adding the sub-band's specific parameters and
a VAD decision generation unit which generates a VAD decision (VADD) by comparing the modified segmental SNR (mssnr) with a threshold value.

In a possible implementation of the VAD apparatus according to the second aspect of the present invention the apparatus comprises a noise characteristic determination unit which determines a noise characteristic (nc) of the input signal based at least on a received input frame of the input audio signal.

In a possible implementation of the VAD apparatus according to the second aspect of the present invention the a noise characteristic determination unit comprises a long term SNR estimation unit which calculates a long term SNR of said input audio signal.

In a further possible implementation of the VAD apparatus according to the second aspect of the present invention the noise characteristic determination unit comprises a background noise variation estimation unit which calculates a stationarity or fluctuation of the background noise of the input audio signal.

In a further possible implementation of the VAD apparatus according to the second aspect of the present invention the noise characteristic determination unit comprises a long term SNR estimation unit which calculates a long term SNR of the input audio signal and a background noise variation estimation unit which calculates a stationarity or fluctuation of the background noise of said input audio signal.

In a further possible implementation of the VAD apparatus according to the second aspect of the present invention the adaptive function ((AF)) is selected dependent on at least one noise characteristic (nc) determined by said noise characteristic determination unit.

The invention further provides an audio signal processing device according to a third aspect of the present invention wherein said audio signal processing device comprises an audio signal processing unit for processing an audio input signal depending on a VAD decision (VADD) provided by the VAD apparatus according to the second aspect of the present invention.

BRIEF DESCRIPTION OF FIGURES

In the following possible implementations of different aspects of the present invention are described with reference to the enclosed figures in more detail.

Fig. 1 shows a flow chart for illustrating a possible implementation of a method for adaptively detecting a voice activity in an input audio signal according to a first aspect of the present invention;

Fig. 2 shows a block diagram of a VAD apparatus for detecting a voice activity in an input audio signal according to a second aspect of the present invention;

Fig. 3 shows a block diagram of an audio signal processing device according to a third aspect of the present invention.

DETAILED DESCRIPTION OF EMBODIMENTS

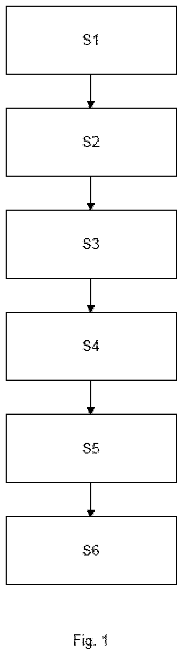

Fig. 1 shows a flow chart of a possible implementation of a method for adaptively detecting a voice activity in an input audio signal according to a first aspect of the present invention. In a first step S1 of the exemplary implementation of the first aspect of the present invention a noise characteristic nc of the input audio signal is determined based at least on a received input frame of the input audio signal. The input audio signal comprises signal frames. In a possible implementation the input signal is segmented into frames of predetermined length of e.g. 20ms and inputted frame by frame. In other implementations the length of the input frames can vary. The noise characteristic nc of the input audio signal determined in step S1 can be a long term SNR lsnr calculated by a long term SNR estimation unit. In another possible implementation the noise characteristic nc determined in step S1 is formed by a background noise variation calculated by a background noise variation estimation unit which calculates a stationarity or fluctuation ε of the background noise bn of the input audio signal. It is also possible that the noise characteristic nc determined in step S1 consists both of a long term SNR lsnr and a background noise variation.

In a further step S2 the received input frame of the input audio signal is divided into several frequency sub-bands.

In a further step S3 a sub-band specific parameter sbsp is calculated based on the sub-band's SNR for each sub-band using an adaptive function AF. In a possible implementation a power spectrum is obtained for each input frame through a fast fourier transformation (FFT) and the obtained power spectrum is divided into a predetermined number of sub-bands with non-linear width. Energies for each sub-band are calculated wherein the energy for each sub-band of the input frame can in a possible implementation be formed by a smoothed energy that is formed by a weighted average of the energies for the same sub-band between the input frame and at least one previous frame. In a possible implementation of the first aspect of the present invention the sub-band SNRs (snr) can be calculated as the modified logarithmic SNRs of the frequency sub-bands:

$$snr(i) = \log_{10}\left( \frac{E(i)}{E_n(i)} \right)$$

wherein E(i) is the energy of ith sub-band of the input frame and En(i) is the energy of the ith sub-band of the background noise estimate. The background noise estimate can be calculated by the background noise estimation unit where the energy of each sub-band of the background noise estimate is calculated by moving-averaging the energies of each sub-band among background noise frames detected. This can be expressed as:

$$E_n(i) = \lambda \cdot E_n(i) + (1 - \lambda) \cdot E(i)$$

where E(i) is the energy of the ith sub-band of the frame detected as background noise, λ is a "forgetting factor" usually in a range between 0.9 - 0.99.

After having obtained a SNR (snr) for each sub-band of said input frame in step S3 a sub-band specific parameter (sbsp) is calculated in step S4 based on the respective SNR (snr) of the respective sub-band using an adaptive function (AF). In a possible implementation of the method for adaptively detecting a voice activity in an input audio signal at least one parameter of the adaptive function (AF) is selected dependent of the determined noise characteristic of the input audio signal. The noise characteristic nc determined in step S1 can comprise a long term SNR and/or a background noise variation of the input audio signal. The adaptive function AF is a non-linear function.

In a possible implementation of the method for adaptively detecting a voice activity in an input audio signal according to the first aspect of the present invention in step S5 a modified segmental SNR (mssnr) is derived by adding the sub-band's specific parameters (sbsp) as follows:

$$mssnr = \sum_{i=1}^{N} sbsp(i)$$

wherein N is the number of frequency sub-bands into which said input frame is divided and
wherein sbsp(i) is a sub-band specific parameter calculated based on the sub-band's SNR for each sub-band using the adaptive function (AF). In a possible implementation of the first aspect of the present invention the modified segmental SNR (mssnr) is calculated as follows:

$$mssnr = \sum_{i=1}^{N} \left( f\left(snr(i)\right) + \alpha \right)^{\beta}$$

wherein snr(i) is the SNR of the ith sub-band of the input frame,
N is the number of frequency sub-bands into which said input frame is divided and:

AF = (f(snr(i))+α)$^{\beta}$ being the adaptive function used to calculate the sub-band specific parameter sbsp(i),
wherein α, β are two configurable variables of the adaptive function (AF).

In a possible implementation of the first aspect of the present invention the first variable α of the adaptive function (AF) depends on a long term SNR (lsnr) of the input audio signal as follows:

$$\alpha = g\ (i,\ lsnr)$$

wherein g is a linear or non-linear function and
wherein the second variable β of the adaptive function ((AF)) depends on the long term SNR (lsnr) and a value $\varphi$:

$$\beta = h\ (lsnr,\ \varphi)$$

wherein h is non-linear function and

$$\varphi = f(snr\ (i)) + \alpha.$$

In a possible implementation of the method according to the first aspect to the present invention the first variable α of the adaptive function (AF) is calculated by:

$$\alpha = g\ (i,\ lnsr) = a(i) \cdot lsnr + b(i)$$

wherein a (i), b (i) are real numbers depending on a sub-band index i and
the second variable β of the adaptive function ((AF)) is calculated by:

$$\beta = h(lsnr, \varphi) = \begin{cases} \beta_1 & \varphi \geq d\ and\ lsnr > e_2 \\ \beta_2 & \varphi \geq d\ and\ e_1 < lsnr \leq e_2 \\ \beta_3 & \varphi \geq d\ and\ lsnr \leq e_1 \\ \beta_4 & otherwise \end{cases}$$

wherein β1 < β2 < β3 and β4 and d as well as e1 < e2 being integer or floating numbers and wherein lsnr is the long term SNR of the input audio signal.

In a possible specific implementation β1 = 4, β2 = 10, β3 = 15 and β4 = 9. In this specific implementation d is set to 1 and e1 = 8 and e2 = 18.

The modified segmental SNR (msnr) is derived in step S5 by adding the sub-band's specific parameters (sbsp). In a further step S6 of the implementation of the method for adaptively detecting a voice activity in an input audio signal as shown in Fig. 1 the derived modified segmental SNR (mssnr) is compared with a threshold value thr to provide a VAD decision (VADD).

In a possible implementation the derived modified segmental SNR (mssnr) is compared with a threshold value thr which is set to:

$$thr = \begin{cases} k_1 & lsnr > e_2 \\ k_2 & e_1 < lsnr \leq e_2 \\ k_3 & lsnr \leq e_1 \end{cases}$$

wherein k1 > k2 > k3 and e1 < e2 being integer or floating numbers and wherein the VAD decision (VADD) is generated as follows:

$$VADD = \begin{cases} 1 & mssnr > thr \\ 0 & mssnr \leq thr \end{cases}$$

wherein VADD = 1 represents an active frame with voice activity being present
and VADD = 0 represents a passive frame with voice activity being absent.

In a possible specific implementation k1 = 135, k2 = 35, k3 = 10 and e1 is set to 8 whereas e2 is set to 18.
In a further possible implementation of the method for adaptively detecting a voice activity in an input audio signal the first variable $\alpha$ of the adaptive function (AF) is calculated by:

$$\alpha = g\,(i,\,lsnr,\,\varepsilon) = a\,(i) \cdot lsnr + b\,(i) + c\,(\varepsilon)$$

wherein a (i), b (i) are real numbers depending on a sub-band index i and
c ($\varepsilon$) is a real number depending on the estimated fluctuation of the background noise bn of the input audio signal and
wherein the second variable $\beta$ of the adaptive function (AF) is calculated by:

$$\beta = h(lsnr,\varphi,\varepsilon) = \begin{cases} \beta_1 & \varphi \geq d \text{ and } lsnr > e_2 \text{ and } \varepsilon \leq p \\ \beta_2 & \varphi \geq d \text{ and } lsnr > e_2 \text{ and } \varepsilon > p \\ \beta_3 & \varphi \geq d \text{ and } e_1 < lsnr < e_2 \text{ and } \varepsilon \leq p \\ \beta_4 & \varphi \geq d \text{ and } e_1 < lsnr < e_2 \text{ and } \varepsilon > p \\ \beta_5 & \varphi \geq d \text{ and } lsnr \leq e_1 \text{ and } \varepsilon \leq p \\ \beta_6 & \varphi \geq d \text{ and } lsnr \leq e_1 \text{ and } \varepsilon > p \\ \beta_7 & \varphi < d \end{cases}$$

wherein $\varphi$ = f(snr(i)) + $\alpha$ and $\varepsilon$ is the estimated fluctuation of the background noise bn and
d and e1 < e2 and p being integer or floating numbers.

In a specific implementation the parameters are set as follows:

$\beta$1 = 3, $\beta$2 = 4, $\beta$3 = 7, $\beta$4 = 10, $\beta$5 = 8, $\beta$6 = 15, $\beta$7 = 15 and
d = 1 and e1 = 8 and e2 = 18 and p = 40.

In an implementation of the method adaptively detecting a voice activity in an input audio signal according to the first aspect of the present invention the derived modified segmental SNR (mssnr) is compared with a threshold value being thr set to:

$$thr = \begin{cases} q_1 + r_1 \cdot Min\left[\dfrac{lsnr - v_1}{W_1}, 1\right] & lsnr > e_2 \\[2em] q_2 + r_2 Min\left[\dfrac{lsnr - v_2}{W_2}, 1\right] & e_1 < lsnr \leq e_2 \\[2em] q_3 + r_3 \cdot Max\left[Min\dfrac{lsnr - v_3}{W_3}, 1\right] & lsnr \leq e_1 \end{cases}$$

wherein q1, q2, q3 and r1, r2, r3 and e1 < e2 and
v1, v2, v3 and w1, w2, w3 being integer or floating numbers.

In a specific implementation of the first aspect of the present invention q1 = 20, q2 = 30, q3 = 9 and r1 = 30, r2 = 10 and r3 = 2. Further, v1 = 18, v2 = 8 and v3 = 5 and w1 = 8, w2 = 10 and w3 = 3. Further, the parameters e1, e2 are set to e1 = 8 and e2 = 18.

Accordingly, in a possible embodiment not only a background noise estimation and a long term SNR estimation is performed but additionally also a background noise variation estimation is performed to determine a background noise fluctuation $\varepsilon$ of the background noise of the input audio signal.

Two factors, $\alpha$, $\beta$ of the adaptive function (AF) adjust a trade-off of the discriminating power of the modified segmental SNR parameter. Different trade-offs significate that the detection is more favourable for either active or inactive detection for the received frames. Generally the higher the long term SNR (lsnr) of the input audio signal is the more favourable it is to adjust the modified segmental SNR (mssnr) for active detection by means of adjusting the corresponding coefficients $\alpha$, $\beta$ of the adaptive function (AF).

The VAD decision performed in step S6 can further go through a hard hang-over procedure. A hard hang-over procedure forces the VAD decisions for several frames to be active immediately after the VAD decision obtained in step S6 changes from active to inactive.

In a possible implementation of the method for adaptively detecting a voice activity in an input audio signal according to the first aspect of the present invention the background noise of the input audio signal is analyzed and a number representing the extent of stationarity or fluctuation of the background noise, denoted by $\varepsilon$, is generated. This fluctuation $\varepsilon$ of the background noise bn can be calculated for example by:

$$\varepsilon = \omega \cdot \varepsilon + (1 - \omega) \cdot ssnr_n$$

wherein $\omega$ is a forgetting factor usually between 0.9 - 0.99 and ssnrn is the summation of snr(i) over all sub-bands of the frame detected as a background frame multiplied by a factor of e.g. 10.

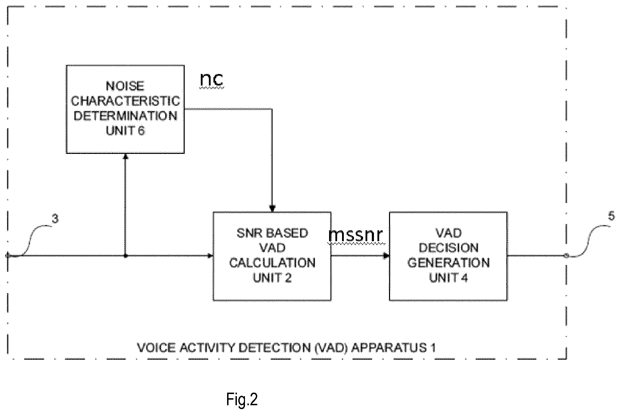

Fig. 2 shows a block diagram of a VAD apparatus 1 according to a second aspect of the present invention. The VAD apparatus 1 comprises a SNR based VAD parameter calculation unit 2 receiving an input audio signal applied to an input 3 of the VAD apparatus 1. The SNR based VAD parameter calculation unit 2 calculates a SNR to each sub-band of an applied input frame of the input audio signal and a sub-band's specific parameter (sbsp) based on said respective sub-band SNR (snr) for each sub-band using an adaptive function (AF) and derives a modified segmental SNR (mssnr) by adding the sub-band's specific parameters (sbsp). The derived modified segmental SNR (mssnr) is applied by the SNR based VAD parameter calculation unit 2 to a VAD decision generation unit 4 of the VAD apparatus 1. The VAD decision generation unit 4 generates a VAD decision (VADD) by comparing the modified segmental SNR (mssnr) with a threshold value (thr). The generated VAD decision (VADD) is output by the VAD apparatus 1 at an output 5.

In a possible implementation of the VAD apparatus 1 according to the second aspect of the present invention the VAD detection apparatus 1 further comprises a noise characteristic determination unit 6 as shown in fig. 2. The noise characteristic determination unit 6 determines a noise characteristic (nc) of the input signal based at least on a received input frame of the input audio signal applied to input 3 of the VAD apparatus 1. In an alternative implementation the noise characteristic (nc) is applied to the SNR based VAD parameter calculation unit 2 from an external noise characteristic determination entity. In a possible implementation of the VAD apparatus 1 according to the second aspect of the present invention the noise characteristic determination unit 6 as shown in fig. 2 can comprise a long term SNR estimation unit which calculates a long term SNR (lsnr) of the input audio signal. In a further possible implementation the noise characteristic determination unit 6 can also comprise a background noise variation estimation unit which calculates a stationarity or fluctuation $\varepsilon$ of the background noise bn of the input audio signal. Accordingly, the noise characteristic (nc) provided by the noise characteristic determination unit 6 can comprise a long term SNR (lsnr) of the input audio signal and/or a stationarity or fluctuation ($\varepsilon$) of the background noise of the input audio signal. In a possible implementation an adaptive function (AF) used by the SNR based VAD parameter calculation unit 2 is selected dependent on at least one noise characteristic nc determined by said noise characteristic determination unit 6.

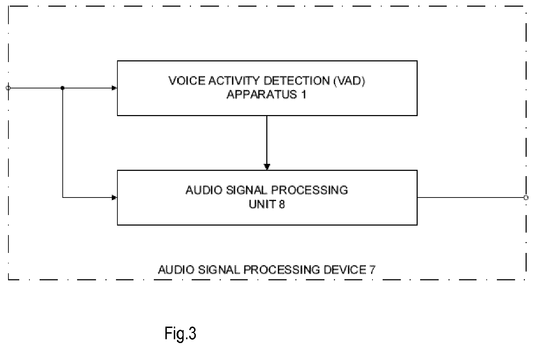

Fig. 3 shows a block diagram of an audio signal processing device 7 according to a third aspect of the present invention comprising VAD apparatus 1 providing a VAD decision (VADD) for an audio signal processing unit 8 within the audio signal processing device 7. The audio signal processing of an input audio signal is performed by the audio signal processing unit 8 depending on the received VAD decision (VADD) generated by the VAD apparatus 1 according to the first aspect of the present invention. The audio signal processing unit 8 can perform for example an encoding of the input audio signal based on the VAD decision (VADD). The audio signal processing device 7 can form part of a speech communication device such as a mobile phone. Further, the audio signal processing device 7 can be provided within a speech communication system such as an audio conferencing system, an echo signal cancellation system, a speech noise reduction system, a speech recognition system or a speech encoding system. The VAD decision (VADD) generated by the VAD apparatus 1 can control in a possible implementation a discontinuous transmission DTX mode of an entity, for example an entity in an cellular radio system, for example a GSM or LTE or CDMA system. The VAD apparatus 1 can enhance the system capacity of a system such as a cellular radio system by reducing co-channel interferences. Furthermore, the power consumption of a portable digital device within a cellular radio system can be reduced significantly.

**Claims**

1.  A method for adaptively detecting a voice activity in an input audio signal consisting of frames, the method comprising:

    determining a noise characteristic (nc) of the input audio signal based at least on a received input frame of the input audio signal;
    deriving a VAD parameter (vp) adapted to the noise characteristic (nc) of the input audio signal; and
    comparing the derived VAD parameter (vp) with a threshold value (thr) to provide a voice activity detection decision (VADD);

    wherein the processing of deriving a VAD parameter (vp) adapted to the noise characteristic (nc) of the input audio signal comprises:

    dividing the received input frame of said audio signal into several sub-bands;
    obtaining a signal to noise ratio (snr) for each of the several sub-bands of said received input frame;
    calculating a sub-band specific parameter (sbsp) based on the respective sub-band's signal to noise ratio (snr) for each of the several sub-bands using an adaptive function (AF), wherein at least one parameter of the adaptive function (AF) is selected dependent on the noise characteristic (nc) of the input audio signal; and
    deriving a modified segmental signal to noise ratio (mssnr) as said VAD parameter (vp) by adding the calculated sub-band specific parameters (sbsp).

2.  The method according to claim 1, wherein the noise characteristic (nc) of the input audio signal is a long term signal to noise ratio (lsnr) or a background noise variation ($\varepsilon$) or a long term signal to noise ratio (lsnr) and a background noise variation.

3.  The method according to claim 1 or 2, wherein the adaptive function (AF) is a non-linear function .

4.  The method according to one of the preceding claims 1 to 3, wherein said signal to noise ratio (snr) for each of the several sub-bands of said input frame is obtained by

    - obtaining a signal energy for each of the several sub-bands,
    - estimating a background noise energy (bn) for each of the several sub-bands, and
    - calculating the signal to noise ratio (snr) for each sub-band depending on the signal energy and the background noise energy of the respective sub-band.

5.  The method according to claim 4, wherein the signal energy for each sub-band of said input frame is a smoothed signal energy forming a weighted average between the input frame and at least one previous frame.

6. The method according to one of the preceding any one of claims 1 to 5,
   wherein the modified signal to noise ratio (mssnr) is calculated by adding sub-band specific parameters (sbsp) as follows:

$$mssnr = \sum_{i=1}^{N} sbsp(i)$$

wherein N is the number of frequency sub-bands into which the input frame is divided, wherein sbsp(i) is a sub-band specific parameter calculated based on the signal to noise ratio (snr) of the respective sub-band using an adaptive function AF.

7. A voice activity detection apparatus for detecting a voice activity in an input audio signal consisting of frames, wherein the voice activity detection (VAD) apparatus comprises:

   a signal to noise ratio based VAD parameter calculation unit which is configured to calculate a signal to noise ratio (snr) for each sub-band of an applied input frame and a sub-band specific parameter (sbsp) based on the respective signal to noise ratio (snr) for each sub-band using an adaptive function (AF), wherein at least one parameter of the adaptive function is selected on the noise characteristic of the input audio signal, and to derive a modified segmental signal to noise ratio (mssnr) by adding the sub-band specific parameters (sbsp); and
   a voice activity detection (VAD) decision generation unit which is configured to generates a voice activity detection decision (VADD) by comparing the modified segmental signal to noise ratio (mssnr) with a threshold value.

8. The voice activity detection apparatus according to claim 7,
   wherein said apparatus comprises a noise characteristic determination unit which is configured determine a noise characteristic (nc) of the input signal based at least on a received input frame of the input audio signal.

9. The voice activity detection apparatus according to claim 8,
   wherein said noise characteristic determination unit comprises a long term signal to noise ratio estimation unit which calculates a long term signal to noise ratio (lsnr) of said input audio signal.

10. The voice activity detection apparatus according to claim 7,
    wherein said noise characteristic determination unit comprises a background noise variation estimation unit which calculates a stationarity or fluctuation (ε) of the background noise of said input audio signal.

11. The voice activity detection apparatus according to one of the preceding claims 7 to 10, wherein said adaptive function (AF) is selected dependent on at least one noise characteristic (nc) determined by said noise characteristic determination unit.

12. An audio signal processing device comprising an audio signal processing unit for processing an audio input signal depending on a voice activity detection decision (VADD) provided by the voice activity detection apparatus according to one of the preceding claims 7 to 11.

**Patentansprüche**

1. Verfahren zum adaptiven Erkennen einer Sprachaktivität in einem Eingangsaudiosignal, das aus Rahmen besteht, wobei das Verfahren umfasst:

   Bestimmen einer Rauscheigenschaft (noise characteristic, nc) des Eingangsaudiosignals auf der Grundlage von mindestens einem empfangenen Eingangsrahmen des Eingangsaudiosignals;
   Ableiten eines VAD-Parameters (vp), der an die Rauscheigenschaft (nc) des Eingangsaudiosignals angepasst ist; und
   Vergleichen des abgeleiteten VAD-Parameters (vp) mit einem Schwellenwert (threshold value, thr), um eine Entscheidung für eine Sprachaktivitätserkennung (voice activity detection decision, VADD) bereitzustellen;

wobei das Ausführen des Ableitens eines VAD-Parameters (vp), der an die Rauscheigenschaft (nc) des Eingangsaudiosignals angepasst ist, umfasst:

Teilen des empfangenen Eingangsrahmens des Audiosignals in mehrere Teilbänder;
Erhalten eines Signal-Rausch-Verhältnisses (signal to noise ratio, snr) für jedes der mehreren Teilbänder des empfangenen Eingangsrahmens;
Berechnen eines teilbandspezifischen Parameters (sub-band specific parameter, sbsp) auf der Grundlage des jeweiligen Signal-Rausch-Verhältnisses jedes Teilbands (snr) für jedes der mehreren Teilbänder mithilfe einer adaptiven Funktion (AF), wobei mindestens ein Parameter der adaptiven Funktion (AF) in Abhängigkeit von der Rauscheigenschaft (nc) des Eingangsaudiosignals ausgewählt wird; und
Ableiten eines modifizierten segmentierten Signal-Rausch-Verhältnisses (mssnr) als den VAD-Parameter (vp), indem die berechneten teilbandspezifischen Parameter (sbsp) addiert werden.

2. Verfahren nach Anspruch 1, wobei die Rauscheigenschaft (nc) des Eingangsaudiosignals ein Langzeit-Signal-Rausch-Verhältnis (lsnr) oder eine Hintergrundrauschvariation ($\varepsilon$) oder ein Langzeit-Signal-Rausch-Verhältnis (lsnr) und eine Hintergrundrauschvariation ist.

3. Verfahren nach Anspruch 1 oder 2, wobei die adaptive Funktion (AF) eine nichtlineare Funktion ist.

4. Verfahren nach einem der vorhergehenden Ansprüche 1 bis 3,
wobei das Signal-Rausch-Verhältnis (snr) für jedes der mehreren Teilbänder des Eingangsrahmens erhalten wird durch

- Erhalten einer Signalenergie für jedes der mehreren Teilbänder,
- Abschätzen einer Hintergrundrauschenergie (background noise energy, bn) für jedes der mehreren Teilbänder, und
- Berechnen des Signal-Rausch-Verhältnisses (snr) für jedes Teilband in Abhängigkeit von der Signalenergie und der Hintergrundrauschenergie des jeweiligen Teilbands.

5. Verfahren nach Anspruch 4,
wobei die Signalenergie für jedes Teilband des Eingangsrahmens eine geglättete Signalenergie ist, die einen gewichteten Mittelwert aus dem Eingangsrahmen und mindestens einem vorhergehenden Rahmen bildet.

6. Verfahren nach einem der vorhergehenden einem der Ansprüche 1 bis 5, wobei das modifizierte Signal-Rausch-Verhältnis (mssnr) berechnet wird, indem teilbandspezifische Parameter (sbsp) wie folgt addiert werden:

$$mssnr = \sum_{i=1}^{N} sbsp(i)$$

wobei N die Anzahl der Frequenzteilbänder ist, in die der Eingangsrahmen geteilt wird, wobei sbsp(i) ein teilbandspezifischer Parameter ist, berechnet auf der Grundlage des Signal-Rausch-Verhältnisses (snr) des jeweiligen Teilbands mithilfe einer adaptiven Funktion AF.

7. Sprachaktivitätserkennungsvorrichtung für ein Erkennen einer Sprachaktivität in einem Eingangsaudiosignal, das aus Rahmen besteht,
wobei die Sprachaktivitätserkennungsvorrichtung (VAD-Vorrichtung) umfasst:

eine Berechnungseinheit für Signal-Rausch-Verhältnis-basierte VAD-Parameter, die konfiguriert ist zum Berechnen eines Signal-Rausch-Verhältnisses (snr) für jedes Teilband eines angewandten Eingangsrahmens und eines teilbandspezifischen Parameters (sbsp) auf der Grundlage des jeweiligen Signal-Rausch-Verhältnisses (snr) für jedes Teilband mithilfe einer adaptiven Funktion (AF), wobei mindestens ein Parameter der adaptiven Funktion in Abhängigkeit von der Rauscheigenschaft des Eingangsaudiosignals ausgewählt wird, und zum Ableiten eines modifizierten segmentierten Signal-Rausch-Verhältnisses (mssnr), indem die teilbandspezifischen Parameter (sbsp) addiert werden; und
eine Entscheidungserzeugungseinheit für eine Sprachaktivitätserkennung (VAD), die konfiguriert ist zum Erzeugen einer Entscheidung einer Sprachaktivitätserkennung (VADD), indem das modifizierte segmentierte Signal-Rausch-Verhältnis (mssnr) mit einem Schwellenwert verglichen wird.

8. Sprachaktivitätserkennungsvorrichtung nach Anspruch 7, wobei die Vorrichtung eine Bestimmungseinheit für Rauscheigenschaften umfasst, die konfiguriert ist um eine Rauscheigenschaft (nc) des Eingangssignals auf der Grundlage von mindestens einem empfangenen Eingangsrahmen des Eingangsaudiosignals zu bestimmen.

9. Sprachaktivitätserkennungsvorrichtung nach Anspruch 8, wobei die Bestimmungseinheit für Rauscheigenschaften eine Auswerteeinheit für ein Langzeit-Signal-Rausch-Verhältnis umfasst, das ein Langzeit-Signal-Rausch-Verhältnis (lsnr) des Eingangsaudiosignals berechnet.

10. Sprachaktivitätserkennungsvorrichtung nach Anspruch 7, wobei die Bestimmungseinheit für Rauscheigenschaften eine Auswerteeinheit für eine Hintergrundrauschvariation umfasst, die eine Stationarität oder eine Fluktuation ($\varepsilon$) des Hintergrundrauschens des Eingangsaudiosignals berechnet.

11. Sprachaktivitätserkennungsvorrichtung nach einem der vorhergehenden Ansprüche 7 bis 10, wobei die adaptive Funktion (AF) in Abhängigkeit von mindestens einer durch die Bestimmungseinheit für Rauscheigenschaften bestimmten Rauscheigenschaft (nc) ausgewählt ist.

12. Audiosignalbearbeitungsvorrichtung, die eine Audiosignalbearbeitungseinheit umfasst, die ein Eingangsaudiosignal in Abhängigkeit von einer Entscheidung der Sprachaktivitätserkennung (VADD) bearbeitet, die durch die Sprachaktivitätserkennungsvorrichtung nach einem der vorhergehenden Ansprüche 7 bis 11 bereitgestellt wird.


**Revendications**

1. Procédé de détection adaptative d'une activité vocale dans un signal audio d'entrée constitué de trames, le procédé comprenant :

   la détermination d'une caractéristique de bruit (nc) du signal audio d'entrée sur la base d'au moins une trame d'entrée reçue du signal audio d'entrée ;
   la déduction d'un paramètre VAD (vp) adapté à la caractéristique de bruit (nc) du signal audio d'entrée ; et
   la comparaison du paramètre VAD (vp) déduit à une valeur de seuil (thr) afin de fournir une décision de détection d'activité vocale (VADD) ;

   dans lequel le traitement de déduction d'un paramètre VAD (vp) adapté à la caractéristique de bruit (nc) du signal audio d'entrée comprend :

   la division de la trame d'entrée reçue dudit signal audio en plusieurs sous-bandes ;
   l'obtention d'un rapport signal à bruit (snr) pour chacune des multiples sous-bandes de ladite trame d'entrée reçue ;
   le calcul d'un paramètre spécifique de sous-bande (sbsp) sur la base du rapport signal à bruit (snr) de la sous-bande respective pour chacune des multiples sous-bandes en utilisant une fonction adaptative (AF), dans lequel au moins un paramètre de la fonction adaptative (AF) est sélectionné en fonction de la caractéristique de bruit (nc) du signal audio d'entrée ; et
   la déduction d'un rapport signal à bruit segmenté modifié (mssnr) en tant que ledit paramètre VAD (vp) en ajoutant les paramètres spécifiques de sous-bande calculés (sbsp).

2. Procédé selon la revendication 1, dans lequel la caractéristique de bruit (nc) du signal audio d'entrée est un rapport signal à bruit à long terme (lsnr) ou une variation du bruit de fond ($\varepsilon$) ou un rapport signal à bruit à long terme (lsnr) et une variation du bruit de fond.

3. Procédé selon la revendication 1 ou 2, dans lequel la fonction adaptative (AF) est une fonction non linéaire.

4. Procédé selon l'une des revendications 1 à 3 précédentes, dans lequel ledit rapport signal à bruit (snr), pour chacune des multiples sous-bandes de ladite trame d'entrée, est obtenu par :

   - obtention d'une énergie de signal pour chacune des multiples sous-bandes,

- estimation d'une énergie de bruit de fond (bn) pour chacune des multiples sous-bandes, et
- calcul du rapport signal à bruit (snr) pour chaque sous-bande en fonction de l'énergie de signal et de l'énergie de bruit de fond de la sous-bande respective.

**5.** Procédé selon la revendication 4,
dans lequel l'énergie de signal pour chaque sous-bande de ladite trame d'entrée est une énergie de signal lissée formant une moyenne pondérée entre la trame d'entrée et au moins une trame précédente.

**6.** Procédé selon l'une des précédentes l'une quelconque revendications 1 à 5,
dans lequel le rapport signal à bruit modifié (mssnr) est calculé en ajoutant des paramètres spécifiques de sous-bandes (sbsp) comme suit :

$$mssnr = \sum_{i=1}^{N} sbsp(i)$$

où N est le nombre de sous-bandes de fréquences en lesquelles la trame d'entrée est divisée,
où sbsp(i) est un paramètre spécifique de sous-bande calculé sur la base du rapport signal à bruit (snr) de la sous-bande respective en utilisant une fonction adaptative (AF).

**7.** Appareil de détection d'activité vocale destiné à détecter une activité vocale dans un signal audio d'entrée constitué de trames,
dans lequel l'appareil de détection d'activité vocale (VAD) comprend :

une unité de calcul de paramètre VAD sur la base du rapport signal à bruit, qui est configurée pour calculer un rapport signal à bruit (snr) pour chaque sous-bande d'une trame d'entrée appliquée et d'un paramètre spécifique de sous-bande (sbsp) sur la base du rapport signal à bruit (snr) respectif pour chaque sous-bande en utilisant une fonction adaptative (AF) dans lequel au moins un paramètre de la fonction adaptative est sélectionné en fonction de la caractéristique de bruit du signal d'audio d'entrée, et pour déduire un rapport signal à bruit segmenté modifié (mssnr) en ajoutant les paramètres spécifiques de sous-bandes (sbsp) ; et
une unité génératrice de décision de détection d'activité vocale (VAD) qui est configurée pour générer une décision de détection d'activité vocale (VADD) en comparant le rapport signal à bruit segmenté modifié (mssnr) à une valeur de seuil.

**8.** Appareil de détection d'activité vocale selon la revendication 7,
dans lequel ledit appareil comprend une unité de détermination de caractéristique de bruit qui est configurée pour déterminer une caractéristique de bruit (nc) du signal d'entrée sur la base d'au moins une trame d'entrée reçue du signal audio d'entrée.

**9.** Appareil de détection d'activité vocale selon la revendication 8,
dans lequel ladite unité de détermination de caractéristique de bruit comprend une unité d'estimation de rapport signal à bruit à long terme qui calcule un rapport signal à bruit à long terme (lsnr) dudit signal audio d'entrée.

**10.** Appareil de détection d'activité vocale selon la revendication 7,
dans lequel ladite unité de détermination de caractéristique de bruit comprend une unité d'estimation de variation de bruit de fond qui calcule une stationnarité ou une fluctuation (ε) du bruit de fond dudit signal audio d'entrée.

**11.** Appareil de détection d'activité vocale selon l'une des revendications 7 à 10 précédentes, dans lequel ladite fonction adaptative (AF) est sélectionné en fonction d'au moins une caractéristique de bruit (nc) déterminée par ladite unité de détermination de caractéristique de bruit.

**12.** Dispositif de traitement de signal audio comprenant une unité de traitement de signal audio destinée à traiter un signal d'entrée audio en fonction d'une décision de détection d'activité vocale (VADD) fournie par l'appareil de détection d'activité vocale selon l'une des revendications 7 à 11 précédentes.

Fig. 1

Fig.2

VOICE ACTIVITY DETECTION (VAD)
APPARATUS 1

AUDIO SIGNAL PROCESSING
UNIT 8

AUDIO SIGNAL PROCESSING DEVICE 7

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2159788 A1